# EUROPÄISCHE PATENTSCHRIFT

(11) **EP 1 871 696 B1**
(45) Veröffentlichungstag und Bekanntmachung des Hinweises auf die Patenterteilung: **11.06.2008**
(21) Anmeldenummer: 06704718.3
(22) Anmeldetag: 23.02.2006
(51) Int. Cl.: B65G 47/91

(54) **GREIFVORRICHTUNG**
GRIPPER DEVICE
DISPOSITIF DE PREHENSION

(30) Priorität: 28.02.2005 AT 3352005
(43) Veröffentlichungstag der Anmeldung: 02.01.2008
(73) Patentinhaber: Trumpf Maschinen Austria GmbH & CO. KG., 4061 Pasching (AT)
(72) Erfinder: THEIS, Helmut, 4540 Pfarrkirchen (AT)
(74) Vertreter: Secklehner, Günter
(86) Internationale Anmeldenummer: PCT/AT2006/000076
(87) Internationale Veröffentlichungsnummer: WO 2006/089327

(56) Entgegenhaltungen:
- EP-A- 0 427 215
- US-A- 2 998 887
- US-A- 3 885 678
- US-A- 5 993 144

## Beschreibung

Die Erfindung betrifft eine Greifvorrichtung, wie sie im Oberbegriff des Anspruches 1 beschrieben ist.

Aus der US 2,998,887 A ist eine Greifvorrichtung für eine Handlingeinrichtung, insbesondere Manipulator, mit einer mit dem Manipulator kuppelbaren Tragvorrichtung und mit auf dieser angeordnetem Haltemittel, insbesondere Vakuumgreifer, für einen bevorzugt plattenförmigen Werkteil und mit Versorgungsmitteln zur Aktivierung oder Deaktivierung des Haltemittels bekannt. Das Haltemittel ist auf einem längenverstellbaren Tragarm angeordnet und der in einem auf der Tragvorrichtung angeordnetem Schwenklager in einer zu einer Kontaktebene des Haltemittels parallelen Schwenkebene schwenkbar gelagert ist.

Aus der DE 36 28 381 A1 ist eine Greifvorrichtung zur Handhabung von Werkstücken mit einer Einrichtung bekannt, die an Saugflächen einer Mehrzahl von Saugern Unterdruck erzeugt. Der erfindungsgemäße Sauggreifer zeichnet sich dadurch aus, dass zum Greifen von Werkstücken unterschiedlicher Größe und unterschiedlichem Gewicht sowie von mehreren Werkstücken gleichzeitig die Sauger in mehreren Reihen nebeneinander angeordnet sind und dass der Unterdruck für die Sauger in jeder Reihe getrennt steuerbar ist. Hierdurch können auch Werkstücke aus einer Reihe von Werkstücken gegriffen werden, wenn die Fläche der Sauger mehrere Werkstücke überdeckt.

Aus der DE 32 34 216 A1 ist eine Vorrichtung zum Be- und insbesondere Entladen von Bearbeitungsmaschinen bekannt, mit der verhindert wird, dass die Werkstückhalterungen, insbesondere Sauggreifer, an Stellen des Werkstücks angreifen, an denen Ausschnitte oder Durchbrüche angeordnet sind. Dies wird mittels einer zweiachsigen Verstellvorrichtung der Werkstückhalterungen am Greiferkopf erreicht, wobei bei einer vollautomatischen Lösung die Verstelleinrichtung mit der Koordinatensteuerung der Bearbeitungsmaschine verbunden sein kann.

Aufgabe der Erfindung ist es, eine Greifeinrichtung mit Haltemitteln für Werkteile, insbesondere Vakuumgreifern, zu schaffen, die einfach an unterschiedliche Werkstückgeometrien anpassbar ist.

Diese Aufgabe der Erfindung wird durch die im Kennzeichenteil des Anspruches 1 wiedergegebenen Merkmalen erreicht. Der überraschende Vorteil dabei ist, dass die Greifkoordinaten in Bezug auf die Werkteilgeometrie unter Berücksichtigung der sich im Zuge der Bearbeitung des Werkteils, z.B. bei Biegevorgängen, Stanzvorgängen etc., ändernden Abmessungen festlegbar sind und ein festgelegtes Greiffeld von keinen Vorrichtungsteilen, die Bearbeitung behindernd, oder ein Umgreifen erforderlich machend, überragt wird.

Vorteilhaft ist auch eine Ausführungsform nach dem Anspruch 2, wodurch sich eine einfache Verstellung und eine stabile Armabstützung und damit sicheres Handling ergibt.

Durch die Ausbildung nach Anspruch 3 ist es möglich, das Haltemittel am Werkteil unmittelbar benachbart zum Rand anzusetzen d.h. mit möglichst großer Greifweite zu erfassen.

Nach einer anderen Ausführungsvariante gemäß Anspruch 4 wird eine verlässliche Aufnahme und Halterung auch großformatiger Werkteile erreicht.

Vorteilhaft ist auch eine Weiterbildung nach Anspruch 5, wodurch eine exakte Ausrichtung des Sauggreifers in Bezug auf eine Aufnahmeebene erreicht wird.

Bei der Ausgestaltung nach Anspruch 6 ist von Vorteil, dass dadurch biege- und torsionssteife Tragarme erreicht werden.

Durch die Ausbildung nach den Ansprüchen 7 und 8 kann das eingestellte Greiffeld dauerhaft fixiert werden.

Gemäß einer vorteilhaften Ausbildung wie im Anspruch 9 beschrieben, ist entsprechend den Anforderungen an ein Greiffeld eine gezielte Beaufschlagung der erforderlichen Haltemittel mit Vakuum oder Mediumsdruck gegeben.

Dabei erweist sich eine Ausgestaltung nach Anspruch 10 vorteilhaft, wodurch verlässliche und erprobte Serienkomponenten zum Einsatz gelangen.

Nach einer vorteilhaften Weiterbildung gemäß Anspruch 11 wird eine sehr kompakte Baueinheit für die Tragvorrichtung erreicht und die Tragarme belastende Massen eingespart.

Von Vorteil ist aber auch eine Ausbildung nach Anspruch 12, wodurch die Versorgung des am teleskopisch verstellbaren Kragarm angeordneten Haltemittels technisch einfach realisierbar ist und störende, lange flexible Leitungen entfallen.

Die Ausgestaltung nach Anspruch 13 ermöglicht eine sehr kompakte Bauweise der Tragvorrichtung.

Vorteilhaft sind auch die Ausbildungen nach den Ansprüchen 14 und 15, wodurch ein automatisiertes Einstellen eines erforderlichen Greiffeldes, gesteuert von einer zentralen Steuereinrichtung entweder des Manipulators oder Fertigungseinrichtung, erreicht wird und ein kurzer Umrüstvorgang und ein verlässliches, weitestgehend fehlerfreies Justieren der Tragarme bzw. der Tragmittel nach bevorzugt in einem Steuerprogramm vorgegebenen Greifkoordinaten gewährleistet wird.

Möglich ist aber auch eine Ausbildung nach Anspruch 16, weil dadurch eine Optimierung des Greiffeldes entsprechend angepasst an die Werkteilgeometrie möglich ist.

Von Vorteil ist aber auch eine Ausbildung nach Anspruch 17, weil dadurch eine automatisierte Kontrolle des von der Greifvorrichtung aufgenommenen Werkteils erreicht wird und die ermittelten Daten einer Qualitätskontrolle zuführbar sind und bei Aufnahme z.B. aneinander haftender Werkteile sofortige Korrekturmaßnahmen gesetzt werden können wie beispielsweise eine Störungsabschaltung und Störungsmeldung.

Schließlich sind aber auch Ausbildungen nach den Ansprüchen 18 und 19 vorteilhaft, weil damit eine Werkteilkontrolle nach der Werkteilgeometrie aber auch eine exakte Positionierung der Greifvorrichtung am Werkteil erreicht wird, maßgeblich für einen hohen Qualitätsstandard des zu fertigenden Produkts.

Zum besseren Verständnis der Erfindung wird diese anhand der in den Figuren dargestellten Ausführungsbeispiele näher erläutert.

Es zeigen:
- Fig. 1: die erfindungsgemäße Greifvorrichtung in Draufsicht;
- Fig. 2: ein Detail der Greifvorrichtung in Ansicht;
- Fig. 3: die Greifvorrichtung , geschnitten gemäß den Linien III-III in Fig.2;
- Fig. 4: eine andere Ausbildung der erfindungsgemäßen Greifvorrichtung in einer Detaildraufsicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

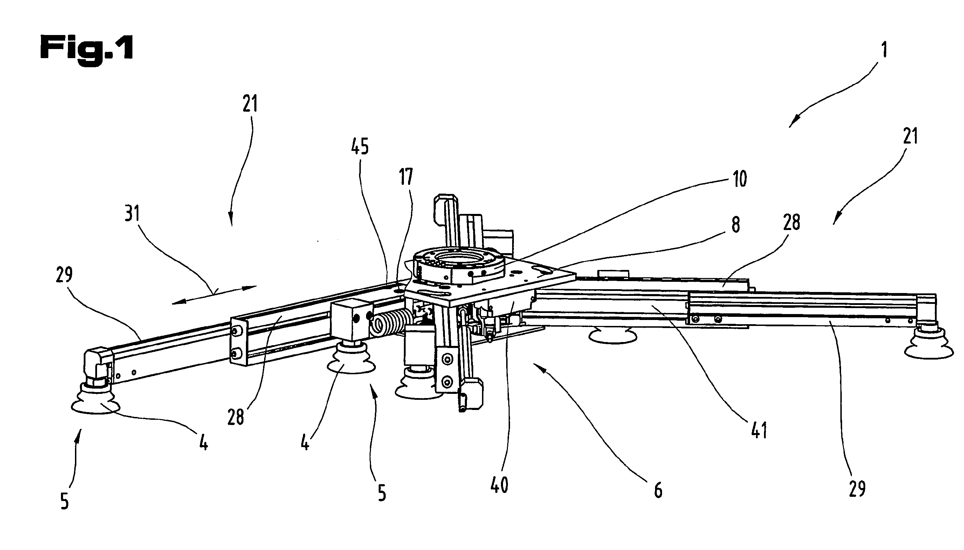

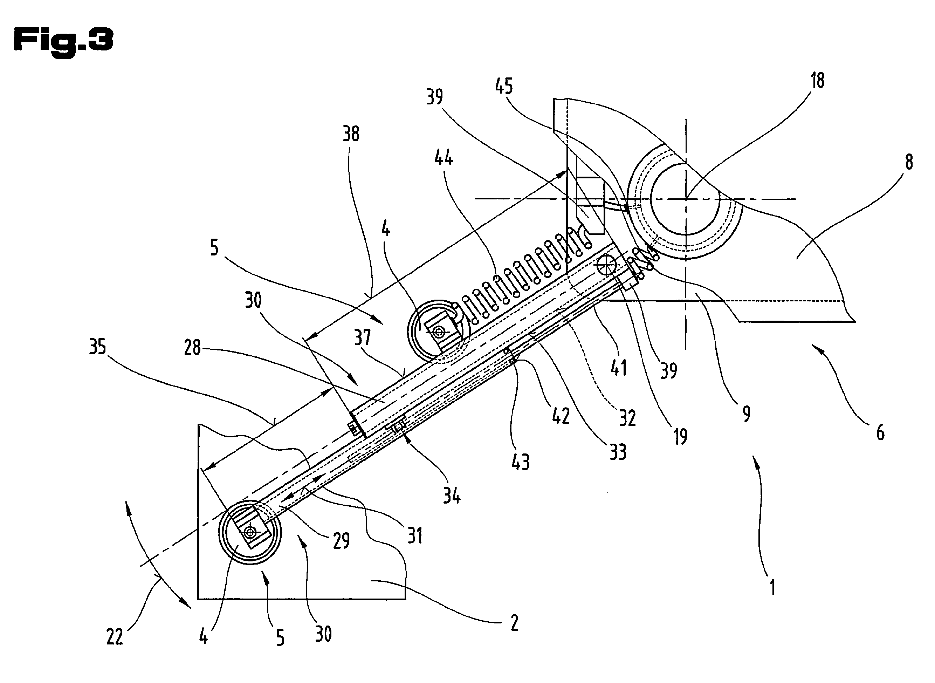

In den Fig. 1 bis 3 ist eine Greifvorrichtung 1 für bevorzugt plattenförmige Werkteile 2, zu deren Aufnahme und/oder Transport und/oder Beschickung einer Fertigungseinrichtung, wie Abkantpresse, etc., gezeigt. Diese ist ausgelegt, den aufzunehmenden Werkteil 2, an einer Oberfläche 3 für dessen Manipulation zu halten, wozu im gezeigten Ausführungsbeispiel bevorzugt mit Unterdruck beaufschlagte Vakuumgreifer 4 als Haltemittel 5 vorgesehen sind die zur Abgabe des Werkteils mit Überdruck versorgt werden.

Die Greifvorrichtung 1 weist eine mit einer Handlingeinrichtung, z.B. Handlingachse, Roboter, kuppelbare Tragvorrichtung 6 auf, beispielsweise gebildet durch zwei parallel zueinander angeordnete und über Distanzelemente 7 zueinander beabstandete Tragplatten 8, 9 und z.B. einem ringförmigen Kupplungselement 10, für die Verbindung mit einer Handlingachse oder mit einem Manipulator 11.

Selbstverständlich sind auch andere Bauformen für die Tragvorrichtung, z.B. in Gehäuseform möglich.

Die Tragvorrichtung 6 ist mit Versorgungsmitteln 12 versehen, z.B. Leitungen 13, für eine Energie- und/oder Signalübertragung und mit Bohrungen 14 für ein Druckmedium, für die Aktivierung oder Deaktivierung aber auch gegebenenfalls für eine Funktions- und Zustandskontrolle der Haltemittel 5, für z.B. Sensoren 15, die an den Haltemitteln 5 beispielsweise zur Gewichtskontrolle des aufgenommenen Werkteils 2 vorgesehen sein können.

Im gezeigten Ausführungsbeispiel sind die Tragplatten 8, 9 der Tragvorrichtung 6 in einem rechteckigen Format, wobei selbstverständlich auch kreisrunde, ovale oder mehreckige Formate zur Anwendung gelangen können. In Eckbereichen 16 sind zwischen den Tragplatten 8, 9 Schwenklager 17 ausgebildet, mit zu einer Mittelachse 18 der Tragvorrichtung 6 parallel ausgerichteten Schwenkachsen 19. In diesen beispielsweise vier Schwenklagern 17 sind in einer zu den Schwenkachsen 19 senkrecht ausgerichteten Schwenkebene 20 Tragarme 21 schwenkbar, gemäß - Doppelpfeil 22 - gelagert. Dem Schwenklager 17 zugeordnet ist eine einen Schwenkwinkel begrenzende und eine auf den aufzunehmenden Werkteil 2 abgestimmte Lage des Tragarms 21 festlegende Anschlag- und Feststellvorrichtung 23 vorgesehen. Diese Anschlag- und Feststellvorrichtung 23 wird beispielsweise durch einen am Tragarm 21 angeordneten Gewindebolzen 24 gebildet, der einen kulissenförmigen Durchbruch 25 der Tragplatte 8 durchragt und die Festlegung der Lage des Tragarms 21 mittels einer am Gewindebolzen 24 aufgesetzten Sechskantmutter 26 durch Klemmung an der Tragplatte 8 erfolgt. Die Fixierung kann aber auch mittels einer Klemmschraube erfolgen.

Eine Krümmung des vom Gewindebolzen 24, bzw. der Klemmschraube durchragten Durchbruches 25 ist entsprechend einem Radius 27 zur Schwenkachse 19 ausgelegt. Eine Längserstreckung des Durchbruches 25 begrenzt den gesamten Schwenkbereich des Tragarmes 21, wobei ein gesamter Schwenkbereich bevorzugt zwischen 45° und 90° beträgt.

Der Tragarm 21 wird durch einen im Schwenklager 17 gelagerten Basisarm 28 und einem Kragarm 29 gebildet, wobei der Basisarm 28 und der Kragarm 29 bevorzugt durch Hohlprofile 30 gebildet sind und der Kragarm 29 relativ zum Basisarm 28 in Richtung einer Längserstreckung des Tragarms 21 gemäß - Doppelpfeil 31 - verstellbar ist. Beispielswiese ist der Kragarm 29 in einer Führungsnut 32 in einer Seitenfläche 33 des Basisarms 28 linear verstellbar geführt und über eine Feststellvorrichtung 34, z.B. eine Klemmschraube, in einer vorgesehenen Auszugslänge 35 fixierbar.

Nach einer wie im Ausführungsbeispiel gewählten Bestückung des Tragarms 21 mit den Haltemitteln 5, insbesondere Vakuumgreifern 4, ist in einem Endbereich 36 des Kragarms 29 eines der Haltemittel 5 vorgesehen und ist ein weiteres der Haltemittel 5 am Basisarm 28 angeordnet und insbesondere an einer der den Kragarm 29 aufnehmenden Seitenfläche 33 entgegengesetzten Seitenfläche 37. Bevorzugt ist dieses Haltemittel 5 in Richtung einer Länge 38 des Basisarms 28 verstell- und einer gewählten Lage positionierbar.

Die Vakuumbeaufschlagung der Haltemittel 5 bei Aufnahme des Werkteils 2, wie auch die Druckbeaufschlagung zur Abgabe des Werkteils 2 erfolgt über aus dem Stand der Technik bekannte elektrisch betätigte Schaltmittel 39, z.B. Pneumatikventile 40, die bevorzugt in der Tragvorrichtung 6, insbesondere zu Ventilgruppen zusammengefass6t, angeordnet sind. Möglich ist jedoch auch, dass der Vakuumgreifer 4 mit dem Pneumatikventil 40 eine Baueinheit bilden.

Im gezeigten Ausführungsbeispiel ist das am Basisarm 28 angeordnetes Haltemittel 5 mit dem Pneumatikventil 40 als Einheit ausgebildet, während das Pneumatikventil 40 zur Beaufschlagung des Haltemittels 5 des Kragarmes 29 in der Tragvorrichtung 6 angeordnet ist.

Zur Versorgung des am Kragarm 29 angeordnetem Haltemittel 5 ist das Hohlprofil 30 des Kragarms 29 druckdicht ausgebildet. Die Beaufschlagung des Hohlprofils 30 erfolgt über ein Druckrohr 41, zwischen dem bevorzugt am Basisarm 28, und damit mitschwenkbar, im Bereich der Tragvorrichtung 6 angeordnetem Schaltmittel 39 und dem Hohlprofil 30, wobei das Druckrohr 41 eine der Tragvorrichtung 6 zugewandte Stirnwand 42 des Hohlprofils 30 in einer Dichtanordnung 43, z.B. O-Ringdichtung, durchragt. Durch die Anordnung des Schaltmittels 39 am Basisarm 28 ist unabhängig von der Verschwenkbarkeit des Basisarms 28 die Beaufschlagung des Hohlprofils 30 des Kragarms 29 mit dem erforderlichen Unterdruck oder Überdruck für den Vakuumgreifer 5 über das starre Druckrohr 41 gewährleistet.

Bei einer Anordnung des bzw. der Schaltmittel 39 in der Tragvorrichtung sind flexible Verbindungsleitungen z.B. Spiralschläuche vorgesehen um die Schwenkbarkeit bzw. Längsverstellung zu gewährleisten.

Die bevorzugte Ansteuerung der Schaltmittel 39 zur Aktivierung bzw. Deaktivierung erfolgt über eine übergeordnete Steuereinrichtung entweder des Manipulators 11 oder zu bedienenden Fertigungseinrichtung und ist zur Reduzierung des Leitungs- und Installationsaufwandes für Steuer- und Signalleitungen mittels ein Asi-Bussystem vorteilhaft, wobei aber auch konventionelle Systeme möglich sind.

Die Ansteuerung der Schaltmittel 39 kann sowohl einzeln als auch gruppenweise erfolgen, wodurch eine an die jeweilige Werkstückgeometrie angepasste Auswahl der zur Anwendung gelangenden Vakuumgreifer 4 ausgewählt werden kann.

Es wird weiter noch darauf hingewiesen, dass die Anzahl und Anordnung der Tragarme 21 auf der Tragvorrichtung 6 sowie der Haltemittel 5 auf den Tragarmen 21 in keiner Weise eingeschränkt ist und es im Rahmen der Erfindung liegt, eine für den jeweiligen Verwendungszweck ausgebildet Greifvorrichtung 1 zu konzipieren.

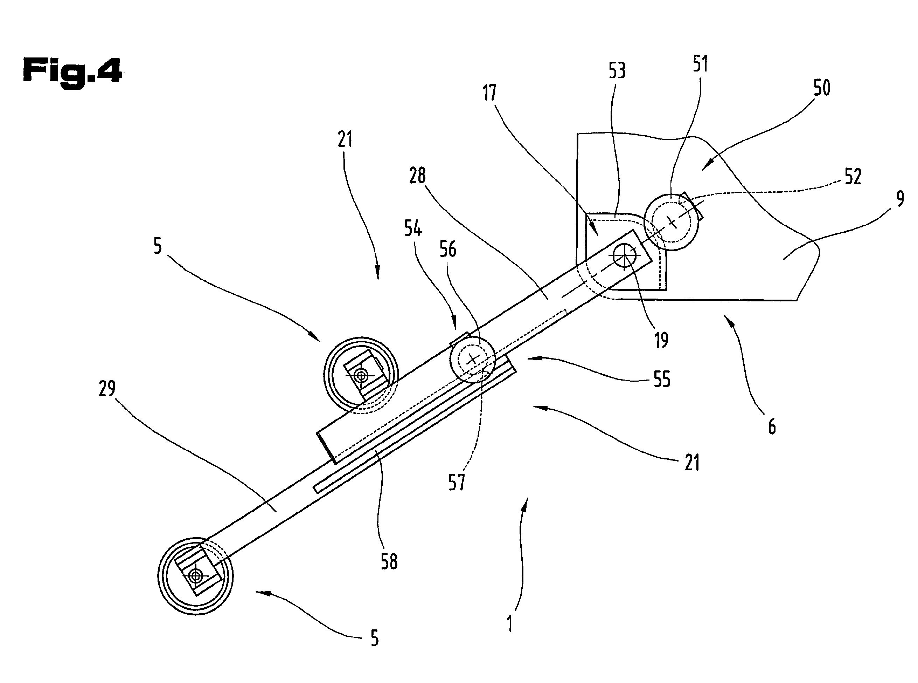

In der Fig. 4 ist eine weitere Ausbildung der erfindungsgemäßen Greifvorrichtung 1 gezeigt. Der wesentliche Aufbau dieser beispielsweise gezeigten und beschriebenen Greifvorrichtung 1 entspricht der bereits vorhergehend beschriebenen Greifvorrichtung.

Für einen weitestgehend automatisierten Betrieb sowie zum Erreichen einer kurzen Umrüstzeit beim Wechsel zwischen unterschiedlichen Werkteilgeometrien ist gemäß diesem Ausführungsbeispiel für das Schwenken und Positionieren des Tragarms 21 ein Schwenkantrieb 50 auf der Tragvorrichtung 6 vorgesehen.

Dieser wird beispielsweise durch einen Elektro-Getriebemotor 51 gebildet, mit einem Zahnritzel 52, das mit einem Zahnsegment 53 im Bereich des Schwenklagers 17 des Basisarms 28 in Eingriff steht. Selbstverständlich ist anstelle der durch Zahnräder gebildeten Antriebsanordnung auch ein beispielsweise Schneckentrieb möglich.

Weiters zeigt das weitere Ausführungsbeispiel die Möglichkeit, die Verstellung des Kragarmes 29 in Bezug auf den Basisarm 28 mittels eines linearen Stellantriebes 54 zu automatisieren. Ein derartiger Stellantrieb 54 ist beispielsweise ein elektromotorisch betriebener Spindeltrieb oder wie gezeigt ein Zahnstangentrieb 55, mit einem am Basisarm 28 angeordneten Antriebsmotor 56 mit einem Zahnritzel 57, das in Eingriff steht mit einer am Kragarm 29 angeordneten Zahnstange 58.

Mittels des Schwenkantriebes 50 und des Stellantriebes 54 ist ein automatisiertes und von einem Fertigungsprogramm steuerbares Umrüsten der Greifvorrichtung 1 bei einem Wechsel unterschiedlich zu handhabender Werkteile erreicht, wodurch einerseits die Umrüstzeit reduziert wird und Umrüstfehler weitestgehend vermieden werden.

Die Ausbildung des Schwenkantriebes 50 und des Stellantriebes 54 sollte durch eine selbsthemmende Antriebsanordnung erfolgen, wodurch Komponenten für die Lagearretierung sowohl für das Schwenken, wie auch für die Ausfahrlänge entfallen können.

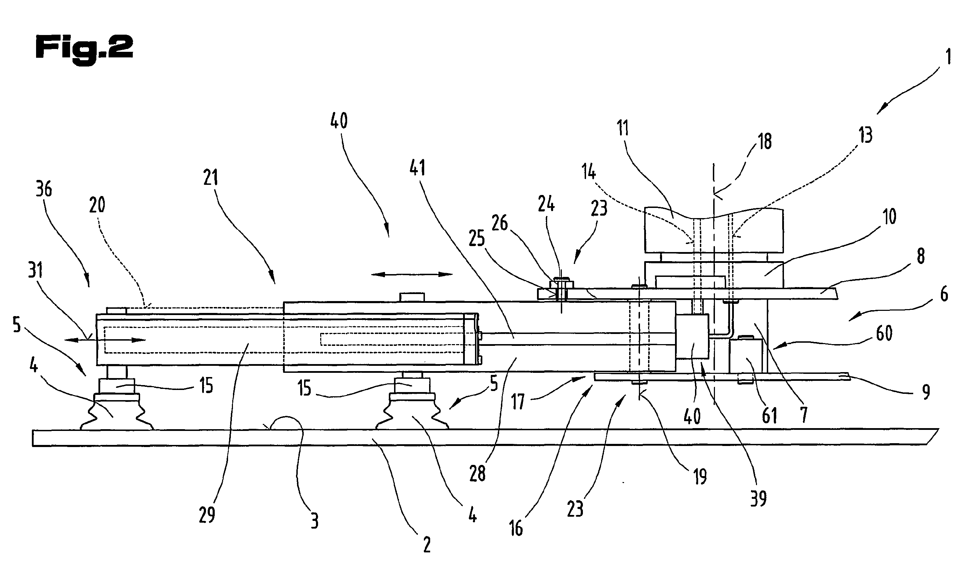

Wie weiter noch der Fig. 2 zu entnehmen, ist beispielsweise in der Tragvorrichtung eine Bilderfassungseinrichtung 60, z. B. eine CCD- Kamera 61, gegebenenfalls mit einer Beleuchtungseinrichtung, integriert, wie sie aus der WO 03/095125 A1 derselben Anmelderin, bekannt ist und mit der Steuereinrichtung des Manipulators 11 bzw. mit der Steuereinrichtung der Fertigungseinrichtung leitungsverbunden ist.

Die Ausführungsbeispiele zeigen mögliche Ausführungsvarianten der Greifvorrichtung, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mitumfasst.

Der Ordnung halber sei abschließend darauf hingewiesen, dass zum besseren Verständnis des Aufbaus der Greifvorrichtung diese bzw. deren Bestandteile teilweise unmaßstäblich und/oder vergrößert und/oder verkleinert dargestellt wurden. Die den eigenständigen erfinderischen Lösungen zugrunde liegende Aufgabe kann der Beschreibung entnommen werden.

Vor allem können die einzelnen in den Fig. 1, 2, 3; 4 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Greifvorrichtung
- 2: Werkteil
- 3: Oberfläche
- 4: Vakuumgreifer
- 5: Haltemittel

- 6: Tragvorrichtung
- 7: Distanzelement
- 8: Tragplatte
- 9: Tragplatte
- 10: Kupplungselement

- 11: Manipulator
- 12: Versorgungsmittel
- 13: Leitung
- 14: Bohrung
- 15: Sensor

- 16: Eckbereich
- 17: Schwenklager
- 18: Mittelachse
- 19: Schwenkachse
- 20: Schwenkebene

- 21: Tragarm
- 22: Doppelpfeil
- 23: Anschlag- u. Feststellvorrichtung
- 24: Gewindebolzen
- 25: Durchbruch

- 26: Sechskantmutter
- 27: Radius
- 28: Basisarm
- 29: Kragarm
- 30: Hohlprofil

- 31: Doppelpfeil
- 32: Führungsnut
- 33: Seitenfläche
- 34: Feststellvorrichtung
- 35: Auszugslänge

- 36: Endbereich
- 37: Seitenfläche
- 38: Länge
- 39: Schaltmittel
- 40: Pneumatikventil

- 41: Druckrohr
- 42: Stirnwand
- 43: Dichtanordnung
- 44: Spiralschlauch
- 45: Anschlussmittel

- 50: Schwenkantrieb

- 51: Elektro-Getriebemotor
- 52: Zahnritzel
- 53: Zahnsegment
- 54: Stellantrieb
- 55: Zahnstangentrieb

- 56: Elektromotor
- 57: Zahnritzel
- 58: Zahnstange
- 59:
- 60: Bilderfassungseinrichtung

- 61: CCD- Kamera

## Patentansprüche

1. Greifvorrichtung (1) für eine Handlingeinrichtung, insbesondere Manipulator (11) mit einer mit dem Manipulator (11) kuppelbaren Tragvorrichtung (6) und mit auf dieser angeordnetem Haltemittel (5), insbesondere Vakuumgreifer (4) für einen bevorzugt plattenförmigen Werkteil (2) und mit Versorgungsmitteln (12) zur Aktivierung oder Deaktivierung des Haltemittels (5), und bei der das Haltemittel (5) auf einem längenverstellbaren, in einem Schwenklager (17), in einer zu einer Kontaktebene des Haltemittels (5) parallelen Ebene schwenkbaren, längenverstellbaren, durch einen Basisarm (28) und einem Kragarm (29) gebildeten Tragarm (21) angeordnet ist, **dadurch gekennzeichnet, dass** ein Schaltmittel (39) für das am Kragarm (29) angeordneten Haltemittel (5) im Bereich des Schwenklagers (17) am Basisarm (28) angeordnet ist, das über ein Druckrohr (41) mit einem Innenraum des durch ein Hohlprofil (38) gebildeten Kragarmes (29) strömungsverbunden ist, welches etwa konzentrisch im Hohlprofil (38) verläuft und in einer Dichtanordnung (43), z.B. O-Ring Dichtung, eine Stirnwand (42) des Hohlprofiles (38) durchragt.

2. Greifeinrichtung nach Anspruch 1, **dadurch gekennzeichnet, dass** der Kragarm (29) in einer in Richtung einer Länge (38) des Basisarmes (28) verlaufenden Führungsnut (32) längs einer Seitenfläche (33) des Basisarmes (28) verstellbar geführt ist.

3. Greifeinrichtung nach Anspruch 1 oder 2, **dadurch gekennzeichnet, dass** das Haltemittel (5) an einem dem Schwenklager (17) entgegen gesetzten Endbereich des Kragarms (29) angeordnet ist.

4. Greifeinrichtung nach Anspruch 1, **dadurch gekennzeichnet, dass** am Basisarm (28) ein weiteres in Richtung der Länge (38) des Basisarms (28) verstellbares Haltemittel (5) angeordnet ist.

5. Greifeinrichtung nach Anspruch 4, **dadurch gekennzeichnet, dass** das Haltemittel (5) in einer Führungsnut am Basisarm (28) verstellbar gelagert ist.

6. Greifeinrichtung nach Anspruch 1, **dadurch gekennzeichnet, dass** der Basisarm (28) und der Kragarm (29) bevorzugt durch Hohlprofile (30) gebildet sind.

7. Greifeinrichtung nach Anspruch 2, **dadurch gekennzeichnet, dass** der Kragarm (29) am Basisarm (28) über eine lösbare Feststelleinrichtung (34) fixierbar ist.

8. Greifeinrichtung nach Anspruch 1, **dadurch gekennzeichnet, dass** dem Schwenklager (17) auf der Tragvorrichtung (6) und/oder auf dem Basisarm (28) eine die Schwenkbarkeit begrenzende bzw. fixierende Anschlag- und Feststellvorrichtung (23) zugeordnet ist.

9. Greifeinrichtung (1) nach Anspruch 1, **dadurch gekennzeichnet, dass** jedem Haltemittel (5) am Basisarm (28) und/oder Kragarm (29) ein mit Anschlussmitteln (45) der Tragvorrichtung (6) oder eines Kupplungselements (10) für Steuersignale und oder einem Medium leitungsverbundenes Schaltmittel (39) zugeordnet ist.

10. Greifeinrichtung nach Anspruch 1, **dadurch gekennzeichnet, dass** das Schaltmittel (39) durch z.B. ein elektrisch, pneumatisch etc. betätigtes Pneumatikventil (40) gebildet ist.

11. Greifeinrichtung nach Anspruch 10, **dadurch gekennzeichnet, dass** die Schaltmittel (39) in der Tragvorrichtung angeordnet sind.

12. Greifeinrichtung nach einem der vorhergehenden Ansprüche, **dadurch gekennzeichnet, dass** das den Kragarm (29) ausbildende Hohlprofil (30) druckdicht ausgebildet ist.

13. Greifeinrichtung nach Anspruch 1, **dadurch gekennzeichnet, dass** der Vakuumgreifer (4) mit dem Schaltmittel (39) bevorzugt eine Einheit ausbildet.

14. Greifeinrichtung nach Anspruch 1, **dadurch gekennzeichnet, dass** der Basisarm (28) über einen Schwenkantrieb (50), z.B. einem Elektrogetriebemotor (51) mit Zahnritzel (52) und Zahnsegment (53), schwenkbar ausgebildet ist.

15. Greifeinrichtung nach Anspruch 1, **dadurch gekennzeichnet, dass** für die Relativverstellung zwischen dem Basisarm (28) und dem Kragarm (29) ein Stellantrieb (54) angeordnet ist, z.B. ein Zahnstangentrieb (55) mit einem am Basisarm (28) angeordneten Elektromotor (56) mit Zahnritzel (57) und einer am Kragarm (29) angeordneten Zahnstange (58).

16. Greifeinrichtung nach Anspruch 1, **dadurch gekennzeichnet, dass** auf der Tragvorrichtung (6) mehrere der Tragarme (21) schwenkbar angeordnet sind.

17. Greifeinrichtung nach Anspruch 1, **dadurch gekennzeichnet, dass** die Haltemittel (5) mit Sensoren (15), z.B. Drucksensoren für eine Gewichtsnahme versehen sind.

18. Greifeinrichtung nach Anspruch 1, **dadurch gekennzeichnet, dass** auf der Tragvorrichtung (6) eine optisch - elektronische Bilderfassungseinrichtung (60) für eine Werkteil- und/oder Positionskennung angeordnet ist.

19. Greifeinrichtung nach Anspruch 18, **dadurch gekennzeichnet, dass** die Bilderfassungseinrichtung (60) durch zumindest eine CCD- Kamera (61) und einer Leuchteneinheit gebildet ist.

## Claims

1. Gripper device (1) for a handling system, in particular a manipulator (11) with a support mechanism (6) which can be coupled with the manipulator (11) and with retaining means (5) disposed on it, in particular a vacuum gripper (4) for a preferably panel-shaped workpiece (2), and with supply means (12) for activating or deactivating the retaining means (5), and the retaining means (5) are disposed on a length-adjustable support arm (21) formed by a base arm (28) and a cantilever arm (29) mounted in a pivot bearing (17) which can be pivoted in a plane parallel with the contact plane of the retaining means (5), **characterised in that** a switch means (39) for the retaining means (5) disposed on the cantilever arm (29) is provided on the base arm (28) in the region of the pivot bearing (17), which has a flow connection via a pressure pipe (41) to an interior of the cantilever arm (29) formed by a hollow section (38), which extends more or less concentrically with the hollow section (38) and extends in a seal arrangement (43), e.g. an O-ring, through an end wall (42) of the hollow section (38).

2. Gripper device as claimed in claim 1, **characterised in that** the cantilever arm (29) is displaceable, guided along a side face (33) of the base arm (28) in a guide groove (32) extending in the direction of a length (38) of the base arm (28).

3. Gripper device as claimed in claim 1 or 2, **characterised in that** the retaining means (5) is disposed on an end region of the cantilever arm (29) opposite the pivot bearing (17).

4. Gripper device as claimed in claim 1, **characterised in that** another retaining means (5) disposed on the base arm (28) is displaceable in the direction of the length (38) of the base arm (28).

5. Gripper device as claimed in claim 4, **characterised in that** the retaining means (5) is mounted on the base arm (28) so that it can be displaced in a guide groove.

6. Gripper device as claimed in claim 1, **characterised in that** the base arm (28) and the cantilever arm (29) are preferably provided in the form of hollow sections (30).

7. Gripper device as claimed in claim 2, **characterised in that** the cantilever arm (29) can be attached to the base arm (28) by means of a releasable fixing mechanism (34).

8. Gripper device as claimed in claim 1, **characterised in that** a stop and blocking mechanism (23) on the support mechanism (6) and/or on the base arm (28) co-operates with the pivot bearing (17) and restricts or blocks the pivoting movement.

9. Gripper device (1) as claimed in claim 1, **characterised in that** each retaining means (5) on the base arm (28) and/or the cantilever arm (29) co-operates with a switch means (39) which is connected by lines for control signals or a medium to terminal means (45) of the support mechanism (6) or a coupling element (10).

10. Gripper device as claimed in claim 1, **characterised in that** the switch means (39) is provided in the form of a pneumatic valve (40), which is operated electrically, pneumatically, etc., for example.

11. Gripper device as claimed in claim 10, **characterised in that** the switch means (39) are disposed in the support mechanism.

12. Gripper device as claimed in one of the preceding claims, **characterised in that** the hollow section (30) constituting the cantilever arm (29) is pressure-tight.

13. Gripper device as claimed in claim 1, **characterised in that** the vacuum gripper (4) preferably forms a unit with the switch means (39).

14. Gripper device as claimed in claim 1, **characterised in that** the base arm (28) is designed so that it can be pivoted via a pivot drive (50), e.g. an electric geared motor (51) with a toothed pinion (52) and toothed segment (53).

15. Gripper device as claimed in claim 1, **characterised in that** an actuator drive (54) is provided in order to generate the relative movement between the base arm (28) and the cantilever arm (29), e.g. a rack-and-pinion drive (55) with an electric motor (56) with a toothed pinion (57) disposed on the base arm (28) and a toothed rack (58) disposed on the cantilever arm (29).

16. Gripper device as claimed in claim 1, **characterised in that** several support arms (21) are pivotably mounted on the support mechanism (6).

17. Gripper device as claimed in claim 1, **characterised in that** the retaining means (5) are provided with sensors (15), e.g. pressure sensors, for weight control purposes.

18. Gripper device as claimed in claim 1, **characterised in that** an optoelectronic image detection unit (60) is disposed on the support mechanism (6) for detecting a workpiece and/or position.

19. Gripper device as claimed in claim 18, **characterised in that** the image detection unit (60) is provided in the form of at least one CCD camera (61) and a lamp unit.

## Revendications

1. Dispositif de préhension (1) pour un dispositif de manutention, en particulier manipulateur (11) avec un dispositif porteur (6) pouvant être couplé avec le manipulateur (11) et avec un moyen de retenue (5) disposé sur ce dispositif, en particulier pince à vide (4) pour une pièce à usiner (2) de préférence en forme de plaque et avec des moyens d'alimentation (12) pour l'activation ou la désactivation du moyen de retenue (5), et sur lequel le moyen de retenue (5) est disposé sur un bras porteur (21) réglable en longueur, pouvant basculer dans un palier basculant (17), dans un plan parallèle à un plan de contact du moyen de retenue (5), réglable en longueur, formé par un bras de base (28) et un bras en porte-à-faux (29), **caractérisé en ce qu'**un moyen de commutation (39) pour le moyen de retenue (5) réalisé sur le bras en porte-à-faux (29) est disposé dans la zone du palier basculant (17) sur le bras de base (28), qui est relié en écoulement par un tuyau de pression (41) à un espace intérieur du bras en porte-à-faux (29) formé par un profilé creux (38), lequel bras est agencé à peu près de façon concentrique dans le profilé creux (38) et dépasse dans un dispositif d'étanchéité (43), par exemple un joint torique, d'une paroi avant (42) du profilé creux (38).

2. Dispositif de préhension selon la revendication 1, **caractérisé en ce que** le bras en porte-à-faux (29) est guidé de façon réglable dans une rainure de guidage (32), agencée en direction d'une longueur (38) du bras de base (28) le long d'une surface latérale (33) du bras de base (28).

3. Dispositif de préhension selon la revendication 1 ou 2, **caractérisé en ce que** le moyen de retenue (5) est disposé sur une zone d'extrémité, opposée au palier basculant (17), du bras en porte-à-faux (29).

4. Dispositif de préhension selon la revendication 1, **caractérisé en ce qu'**un autre moyen de retenue (5), réglable en direction de la longueur (38) du bras de base (28), est disposé sur le bras de base (28).

5. Dispositif de préhension selon la revendication 4, **caractérisé en ce que** le moyen de retenue (5) est logé de façon déplaçable dans une rainure de guidage sur le bras de base (28).

6. Dispositif de préhension selon la revendication 1, **caractérisé en ce que** le bras de base (28) et le bras en porte-à-faux (29) sont formés de préférence par des profilés creux (30).

7. Dispositif de préhension selon la revendication 2, **caractérisé en ce que** le bras en porte-à-faux (29) peut être fixé sur le bras de base (28) au moyen d'un dispositif de blocage (34) amovible.

8. Dispositif de préhension selon la revendication 1, **caractérisé en ce qu'**un dispositif de butée et de blocage (23) limitant ou fixant la possibilité de basculement est attribué au palier basculant (17) sur le dispositif porteur (6) et/ou sur le bras de base (28).

9. Dispositif de préhension (1) selon la revendication 1, **caractérisé en ce qu'**un moyen de commutation (39) relié au niveau de la conduite à des moyens de raccordement (45) du dispositif porteur (6) ou d'un élément d'accouplement (10) pour des signaux de commande et/ou un agent est attribué à chaque moyen de retenue (5) sur le bras de base (28) et/ou le bras en porte-à-faux (29).

10. Dispositif de préhension selon la revendication 1, **caractérisé en ce que** le moyen de commutation (39) est formé par, par exemple, une vanne pneumatique (40) actionnée de façon électrique, pneumatique, etc.

11. Dispositif de préhension selon la revendication 10, **caractérisé en ce que** les moyens de commutation (39) sont disposés dans le dispositif porteur.

12. Dispositif de préhension selon l'une quelconque des revendications précédentes, **caractérisé en ce que** le profilé creux (30) formant le bras en porte-à-faux (29) est réalisé de façon étanche à la pression.

13. Dispositif de préhension selon la revendication 1, **caractérisé en ce que** la pince à vide (4) forme avec le moyen de commutation (39) de préférence une unité.

14. Dispositif de préhension selon la revendication 1, **caractérisé en ce que** le bras de base (28) est réalisé pivotant au moyen d'une commande de pivotement (50), par exemple un moteur à engrenage électrique (51) avec pignon (52) et segment denté (53).

15. Dispositif de préhension selon la revendication 1, **caractérisé en ce qu'**un servomoteur (54) est disposé pour le déplacement relatif entre le bras de base (28) et le bras en porte-à-faux (29), par exemple une commande à crémaillère (55) avec un moteur électrique (56) disposé sur le bras de base (28) avec pignon (57) et une crémaillère (58) disposée sur le bras en porte-à-faux (29).

16. Dispositif de préhension selon la revendication 1, **caractérisé en ce que** plusieurs des bras porteurs (21) sont disposés basculants sur le dispositif porteur (6).

17. Dispositif de préhension selon la revendication 1, **caractérisé en ce que** les moyens de retenue (5) sont dotés de capteurs (15), par exemple, des capteurs de pression pour une prise de poids.

18. Dispositif de préhension selon la revendication 1, **caractérisé en ce qu'**un dispositif d'enregistrement d'image (60) optoélectronique pour une reconnaissance de pièce à usiner et/ou de position est disposé sur le dispositif porteur (6).

19. Dispositif de préhension selon la revendication 18, **caractérisé en ce que** le dispositif d'enregistrement d'image (60) est formé par au moins une caméra CCD (61) et une unité d'éclairage.
